# EUROPÄISCHE PATENTSCHRIFT

(11) **EP 0 716 221 B1**
(45) Veröffentlichungstag und Bekanntmachung des Hinweises auf die Patenterteilung: **20.01.1999**
(21) Anmeldenummer: 95118759.0
(22) Anmeldetag: 29.11.1995
(51) Int. Cl.: F01N 7/04, F02B 37/18

(54) **Brennkraftmaschine mit zwei Zylinderbänken**
Internal combustion engine with two cylinder banks
Moteur à combustion interne aves deux rangées de cylindres

(30) Priorität: 10.12.1994 DE 4444098
(43) Veröffentlichungstag der Anmeldung: 12.06.1996
(73) Patentinhaber: ADAM OPEL AG, 65423 Rüsselsheim (DE)
(72) Erfinder: Indra, Friedrich, Prof. Dr.-Ing., D-64673 Zwingenberg (DE); Janthur, Ingo W., Dipl-Ing., D-65428 Rüsselsheim (DE)
(74) Vertreter: Bergerin, Ralf, Dipl.-Ing.

(56) Entgegenhaltungen:
- EP-A- 0 253 076
- EP-A- 0 525 668
- DE-C- 409 619
- US-A- 4 235 076

## Beschreibung

Die Erfindung betrifft eine Brennkraftmaschine gemäß dem Oberbegriff des Anspruches 1.

Eine Brennkraftmaschine dieser Art ist mit US-A-4 235 076 beschrieben. Bei dieser Brennkraftmaschine kann der Abgasstrom beider Zylinderbänke auf die im Verlauf einer Abgasleitung angeordnete Turbine eines Abgasturboladers wirken oder durch ein Abgasventil zumindest teilweise unter Umgehung der Turbine direkt in die Abgasleitung fließen, in der sich stromab des Abgasventils ein Katalysator befindet. Dieser Katalysator muß so bemessen sein, daß er bei Vollast der Brennkraftmaschine die Abgasmenge beider Zylinderbänke aufnehmen kann, ohne dabei zu überhitzen. Von Nachteil ist, daß sich ein solcher Katalysator bei einem Kaltstart nur zögernd erwärmt. Bei einer Verkleinerung des Katalysators steigt die Gefahr der Überhitzung bei Vollast und der Abgasgegendruck nimmt leistungsmindernd zu. Durch Umleitung eines Teils des Abgases direkt auf den Katalysator und an der Turbine des Abgasturboladers vorbei, kann die Zeit zur Erwärmung des Katalysators auf Starttemperatur zwar verkürzt werden. In dieser Zeit ist jedoch die Ladeleistung des Turboladers und damit auch der Gasdurchsatz der Brennkraftmaschine reduziert, was wiederum zu einer Verlängerung der Erwärmungszeit des Katalysators während einer Kaltstartphase führt.

Mit DE 38 24 346 ist eine Brennkraftmaschine mit zwei Zylinderbänken beschrieben, bei der ein Abgasturbolader lediglich einer Zylinderbank zugeordnet ist, während die andere Zylinderbank ausschließlich für einen Saugmotorbetrieb konzipiert ist. Mit einer Brennkraftmaschine dieser Art sollen insbesondere die Herstellungskosten und das Motorgewicht reduziert werden. Nachteilig für eine solche Maschine sind jedoch die erforderlichen unterschiedlichen Bauteile zwischen den zwei Zylinderbänken. Nicht erkenntlich ist auch, wie bei einem solchen Motor eine schnell ansprechende katalytische Abgasreinigungsanlage anzuordnen ist.

Die DE 42 09 155 A1 beschreibt ein Auspuffsystem für einen Verbrennungsmotor mit zwei Zylindergruppen, bei dem jeder Zylindergruppe ein gesonderter vorgeschalteter Katalysator zur Reinigung der Abgase zugeordnet ist, und zwar in einem Bereich der Abgasanlage, der vor der Vereinigung der beiden jeweils den Zylindergruppen zugeordneten Abgasrohre und einem nach der Vereinigung angeordneten Hauptkatalysator liegt. Die beiden vorgeschalteten Katalysatoren unterscheiden sich in ihrer Größe, wobei der kleinere von beiden mit geringerer Kapazität an einem von Kühlluft geschützten Ort angeordnet ist. Als Vorteil eines solchen Auspuffsystems soll ein schnelles Anspringen vor allem des kleinen vorgeschalteten Katalysators vor dem größeren vorgeschalteten Katalysator und auch vor dem Hauptkatalysator erreicht werden. Bei einer solchen Katalysatoranordnung ist jedoch die Anordnung eines Abgasturboladers nicht vorgesehen.

Um ein schnelleres Anspringen der Katalysatoren bei einem Motor mit zwei Zylinderbänken zu erzielen, sind nach DE 43 32 086 A1 jeder Zylinderbank ein Katalysator zugeordnet, und bei Kaltstart des Motors wird das Abgas jeder Zylinderbank über eine kurze direkte Leitung dem zugeordneten Katalysator zugeführt. Nach Erwarmen der Katalysatoren auf Betriebstemperatur wird durch Umschaltventile für das Abgas beider Zylinderbänke eine Umleitung geschaltet, bei deren Durchlaufen es abkühlt, so daß eine Schädigung der Katalysatoren vermieden wird. Ein Hinweis für die vorteilhafte Einbeziehung eines Turboladers in ein solches Abgasreinigungssystem ist nicht erkennbar.

Für eine Abgasanlage für eine Brennkraftmaschine mit zwei Zylinderbänken, Lambdaregelung mittels im Abgasstrom angeordneter Lambdasonden und jeweils einem Abgassammelrohr für jede Zylinderbank wird durch DE 37 40 238 A1 vorgeschlagen, daß der Abgasstrom jeder Zylinderbank in zwei Teilströme aufgeteilt ist und jeweils ein Teilstrom der einen Zylinderbank mit einem Teilstrom der anderen Zylinderbank zusammengefaßt ist und einem Katalysator zugeführt wird. Damit hat das den beiden Katalysatoren zugeführte Abgas eine weitgehend identische Zusammensetzung und es bedarf nur an einem Abgasstrang einer Lambdasonde. Eine beschleunigte Aufheizung des Katalysators erfolgt dadurch jedoch nicht und ein Hinweis für die Anordnung eines Turboladers ist nicht gegeben.

Die DE 33 06 484 A1 beschreibt eine Brennkraftmaschine ohne Unterteilung in Zylinderbänke, bei der im Abgaskanal die Turbine eines Abgasturboladers und stromabwärts der Turbine ein Abgaskatalysator angeordnet ist. Ein Temperatursensor steuert zumindest einen Teil des Abgases während der Warmlaufphase stromaufwärts der Turbine über eine Umgehungsleitung an der Turbine vorbei in den Abgaskanal zwischen Turbine und Katalysator. Damit gelingt es trotz Anordnung eines Turboladers einen im gleichen Abgaskanal angeordneten Katalysator relativ früh auf Starttemperatur zu bringen. Während dieser Startphase kann der Turbolader aber keine oder nur begrenzte Ladeleistung erbringen, so daß die Brennkraftmaschine ebenso nur eine Teillast erbringen kann. Ein Hinweis auf eine Anordnung von Turbolader und Katalysator bei einer Brennkraftmaschine mit zwei Zylinderbänken ist nicht ableitbar.

Der Erfindung liegt die Aufgabe zugrunde, eine Brennkraftmaschine mit zwei Zylinderbänken zu schaffen, deren Abgas auf einen gemeinsamen Abgasturbolader wirkt, trotzdem beiden Zylinderbänken zur Reduzierung des Abgasgegendruckes jeweils ein Abgasstrang mit einem Katalysator zuordenbar ist, wobei zur Reduzierung der schädlichen Abgasbestandteile während der Anlaufphase der Brennkraftmaschine trotz voller Leistungsausnutzung des Abgasturboladers ein schnelles Ansprechen der Katalysatoren erreicht wird und eine Überhitzung des Katalysators bei Dauerbetrieb vermieden wird.

Erfindungsgemäß wird diese Aufgabe durch die Merkmale des Anspruches 1 gelöst.

Bei einer solchen Ausführung kann die Verbindungsleitung mit relativ geringem Querschnitt ausgeführt sein, da sie nur die bei Teillast an einer Zylinderbank entstehende Abgasmenge führen muß. Bei Vollast wird die zusätzlich anfallende Abgasmenge durch das Abgasventil in den zweiten Abgasstrang geleitet. Bei Teillast wird so die Abgasmenge beider Zylinderbänke vollständig über die Turbine des Abgasturboladers auf den Katalysator des ersten Abgasstranges geführt. Dadurch wird einerseits der Abgasturbolader auch bei Teillast in einem günstigen Wirkungsgradbereich betrieben, andererseits wird der Katalysator, der jetzt als einziger vom Abgas beaufschlagt wird, schnell seine Betriebstemperatur erreichen und anspringen. Bei Vollast bleibt trotzdem ein geringer Abgasgegendruck erhalten, weil dann ein Teil der größeren Abgasmenge durch das geöffnete Abgasventil auch über den zweiten Abgasstrang abströmen kann. Die bei Vollast anfallende Abgasmenge kann dann auch relativ schnell den zweiten Katalysator im zweiten Abgasstrang auf Anspringtemperatur bringen, während der erste Katalysator entlastet ist und so nicht überhitzt werden kann.

Bei einer vorteilhaften Ausführungsform der Erfindung ist der Ausgang des Katalysators im ersten Abgasstrang ausschließlich verbunden mit dem zweiten Abgasstrang vor dem darin angeordneten Katalysator.

Bei Teillast und geschlossenem Abgasventil wird das Abgasvolumen beider Zylinderbänke so über die Turbine des Abgasturboladers, dem Katalysator des ersten Abgasstranges und danach über den Katalysator des zweiten Abgasstranges strömen. Danach kann es über die üblichen Schalldämpfer ein- oder zweiflutig weitergeleitet sein.

Bei dieser Ausführungsform wirkt der Katalysator des ersten Abgasstranges während des Teillastbetriebes als Vorkatalysator, der sich entsprechend schnell erwärmt, und der Katalysator im zweiten Abgasstrang als nachgeschalteter Hauptkatalysator. Dieser wird zwar bei Teillast vorgeheizt, muß aber noch nicht auf volle Betriebstemperatur kommen. Nach Öffnen des Abgasventils bei höherer Last der Brennkraftmaschine wird jedoch durch die größere Abgasmenge und deren höhere Temperatur gegenüber der über den Abgasturbolader fließenden Teilmenge auch der vorgeheizte zweite Katalysator schnell anspringen können.

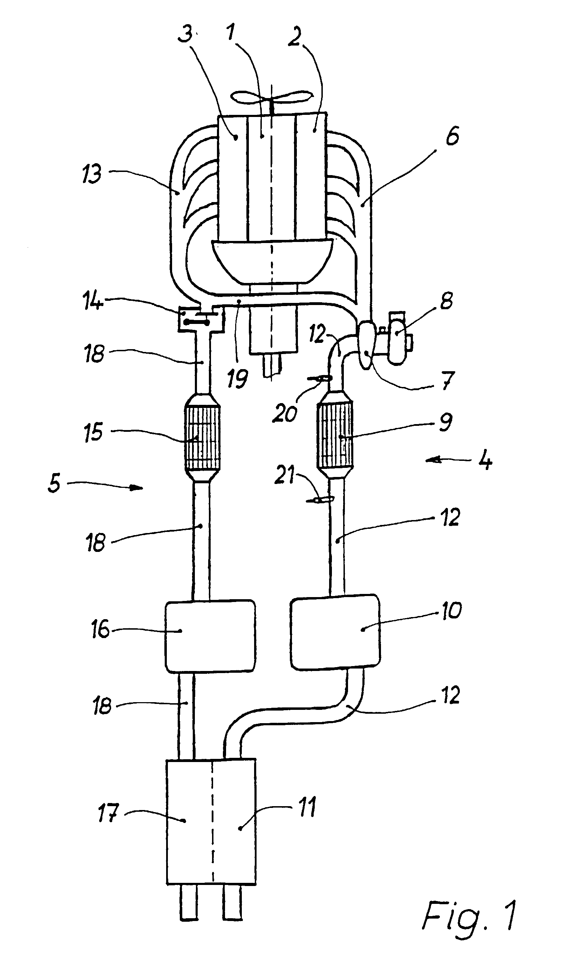

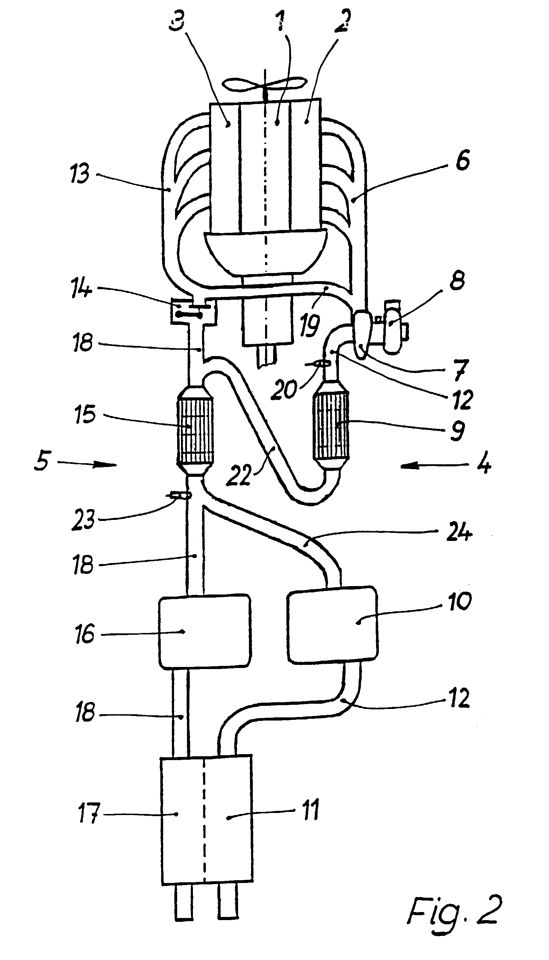

Ausführungsbeispiele der Erfindung sind anhand von Zeichnungen nachstehend näher beschrieben. Die Figuren 1 und 2 zeigen in schematisierter Form jeweils eine Brennkraftmaschine mit zwei Zylinderbänken und einer an diese angepaßte Abgasanlage.

Im Ausführungsbeispiel nach Figur 1 hat die Brennkraftmaschine 1 mit den Zylinderbänken 2 und 3 zwei Abgasstränge 4 und 5. Der erste Abgasstrang 4 umfaßt ein mit der ersten Zylinderbank 2 verbundenes Abgassammelrohr 6, eine Turbine 7 eines Abgasturboladers 8, einen ersten Katalysator 9, einen Vorschalldämpfer 10, einen Nachschalldämpfer 11 sowie diese Bauteile verbindende Rohrleitungen 12. Der zweite Abgasstrang 5 umfaßt ein mit der zweiten Zylinderbank 3 verbundenes Abgassammelrohr 13, ein am Ende des Abgassammelrohres 13 angeordnetes Abgasventil 14, einen zweiten Katalysator 15, einen Vorschalldämpfer 16, einen Nachschalldämpfer 17 und diese Bauteile verbindende Rohrleitungen 18.

Vor dem Abgasventil 14 im Abgasstrang 5 zweigt eine Verbindungsleitung 19 ab und führt zu dem Abgasstrang 4 vor die Turbine 7 des Abgasturboladers 18. Vor und nach dem Katalysator 9 ist jeweils eine Lambdasonde 20, 21 am Abgasstrang 4 vorgesehen.

Bei Teillastbetrieb der Brennkraftmaschine 1 ist das Abgasventil 14 geschlossen. Das Abgas der Zylinderbank 2 gelangt aus dem Abgassammelrohr 6 direkt und das der anderen Zylinderbank 3 aus dem Abgassammelrohr 13 über die Verbindungsleitung 19 zur Turbine 7 des Abgasturboladers 8. Damit kann der Abgasturbolader 8 bereits bei relativ niedriger Last der Brennkraftmaschine 1 ansprechen. Die gesamte Abgasmenge beider Zylinderbänke 2 und 3 durchströmt auch den Katalysator 9, der so auch bei Teillast schnell seine Betriebstemperatur erreicht und anspringt. Über die beiden Lambdasonden 20 und 21 wird dabei die Gemischzusammensetzung für die Brennkraftmaschine 1 geregelt. Bei hoher Last bzw. Vollast der Brennkraftmaschine 1 wird über die elektronische Motorregelung das Abgasventil 14 geöffnet. Damit wird auch der Abgasstrang 5 vom Abgassammelrohr 13 an freigegeben. Dadurch reduziert sich der Abgasgegendruck auf die Brennkraftmaschine 1. Die bei hoher Leistung auch in größerem Umfang entstehende Abgasmenge verteilt sich auf beide Abgasstränge 4 und 5. Dabei ist das auf den Katalysator 15 des zweiten Abgasstranges 5 greifende Abgas wärmer als das auf den Katalysator 9 des ersten Abgasstranges 4, da es nicht die Turbine 7 passiert. Dadurch wird auch der Katalysator 15 schnell seine Betriebstemperatur erreichen und anspringen. Eine gesonderte Regelung des Katalysators 15 durch Lambdasonden ist nicht erforderlich, da bei erhöhter Leistung der Brennkraftmaschine 1 eine Veränderung des Gemisches nicht erforderlich ist.

Beim Ausführungsbeispiel nach Figur 2 ist der erste Abgasstrang 4 mit einer Verbindungsleitung 22 ständig über beide Katalysatoren 9 und 15 geleitet, so daß hier im Teillastbetrieb der Brennkraftmaschine 1, bei welcher das Abgasventil 14 geschlossen ist, der Katalysator 9 als Vorkatalysator und der Katalysator 15 als Hauptkatalysator wirken kann. Hinter dem Katalysator 15 wird der Abgasstrang 4 wieder mit einer Leitung 24 abgezweigt. Das Ansprechverhalten des Turboladers 8 entspricht dem des vorangegangenen Ausführungsbeispiele. Der Katalysator 9 erreicht sehr schnell seine Betriebstemperatur und springt an, da er mit der gesamten Abgasmenge beaufschlagt ist. Der zweite Katalysator 15 wird bei Teillast bereits vorgewärmt. Beide Katalysatoren 9 und 15 werden durch die Lambdasonde 20 am Eingang des Katalysators 9 und durch die Lambdasonde 22 am Ausgang des Katalysators 15 gemeinsam geregelt.

Bei hoher Last der Brennkraftmaschine 1 öffnet das Abgasventil 14. Der Abgasgegendruck auf die Brennkraftmaschine 1 wird vorteilhaft reduziert. Der Anteil der auf die Turbine 7 einwirkenden Abgasmenge ist im Verhältnis zur Gesamtabgasmenge reduziert.

Der besondere Vorteil einer nach der Erfindung ausgeführten Brennkraftmaschine mit zwei Zylinderbänken besteht darin, daß die Anbindung nur eines Abgasturboladers relativ raumökonomisch erfolgen kann, da das Verbindungsrohr 19 im Querschnitt gegenüber üblichen Zuleitungen klein ausgeführt werden kann, da es nur die bei Teillast anfallende Abgasmenge einer Zylinderbank führen muß. Die Turbine 7 des Abgasturboladers 8 wird über den gesamten Motorbetriebsbereich annähernd gleichmäßig belastet, da bei Teillast die Abgasmenge beider Zylinderbänke 2 und 3 über die Turbine 7 laufen, bei hoher Last jedoch im wesentlichen nur die der einen Zylinderbank 2. Durch die Konzentration der gesamten Abgasmenge beider Zylinderbänke 2 und 3 auf den einen Katalysator 9 während des Teillastbetriebes der Brennkraftmaschine 1 wird auch bei Teillast und trotz Vorhandensein eines Abgasturboladers ein schnelles Anspringen des Katalysators 9 erreicht. Bei Vollast wird der Abgasgegendruck über zwei wirksame Abgasstränge 4 und 5 niedrig gehalten. Trotz der Anordnung von zwei Katalysatoren kann im allgemeinen mit zwei, maximal mit drei Lambdasonden ein geregelter Betrieb der Katalysatoren erreicht werden.

Durch die Anordnung des Abgasturboladers an der Verbindungsstelle von Verbindungsleitung (19) und dem zweiten Abgassammelrohr (6) kann das Gehäuse des Abgasturboladers in vorteilhafter Weise von einem Teil des Abgassammelrohres (6) gebildet werden, so daß sich eine Teilereduzierung ergibt.

## Patentansprüche

1. Brennkraftmaschine mit zwei Zylinderbänken (2, 3) mit je einem Abgassammelrohr (6, 13), einem gemeinsamen Abgasturbolader (8) und einer katalytischen Abgasreinigungsanlage, wobei die beiden Abgassammelrohre (6, 13) unmittelbar durch eine Verbindungsleitung (19) verbunden sind und an der einen Verbindungsstelle von Verbindungsleitung (19) und einem ersten Abgassammelrohr (13) ein bei Teillast der Brennkraftmaschine (1) den Durchgang zu einem Abgasstrang schließendes und bei Vollast öffnendes Abgasventil (14) angeordnet ist, **dadurch gekennzeichnet,** daß die Turbine (7) des Abgasturboladers (8) an der anderen Verbindungsstelle von Verbindungsleitung (19) und zweitem Abgassammelrohr (6) angeordnet ist und von jedem der Verbindungsstellen ein Abgasstrang (4, 5) ausgeht, dem jeweils stromabwärts der Verbindungsstellen ein Katalysator (9, 15) zugeordnet ist.

2. Brennkraftmaschine nach Anspruch 1, **dadurch gekennzeichnet,** daß der Ausgang des Katalysators (9) im ersten Abgasstrang (4) in den zweiten Abgasstrang (5) vor dessen Katalysator (15) geleitet ist.

## Claims

1. Internal combustion engine with two cylinder banks (2, 3) with an exhaust manifold (6, 13) each, a common exhaust turbocharger (8) and a catalytic exhaust cleaning system, wherein the two exhaust manifolds (6, 13) are directly connected by a connecting pipe (19), and at one point of connection of connecting pipe (19) and a first exhaust manifold (13) is arranged an exhaust valve (14) which closes the passage to an exhaust train when the engine (1) is under partial load and opens it under full load, characterised in that the turbine (7) of the exhaust turbocharger (8) is arranged at the other point of connection of connecting pipe (19) and second exhaust manifold (6), and from each of the points of connection extends an exhaust train (4, 5) with each of which is associated a catalytic converter (9, 15) downstream of the points of connection.

2. Internal combustion engine according to claim 1, characterised in that the output of the catalytic converter (9) in the first exhaust train (4) leads into the second exhaust train (5) before the catalytic converter (15) thereof.

## Revendications

1. Moteur à combustion interne à deux rangées de cylindres (2,3), avec chacune un collecteur de gaz d'échappement (6,13), un turbocompresseur (8) à gaz d'échappement commun et un dispositif catalytique d'épuration des gaz d'échappement, les deux collecteurs de gaz d'échappement (6,13) étant reliés directement l'un à l'autre par une conduite de liaison (19) et une soupape à gaz d'échappement (14) qui ferme le passage vers un tronçon d'échappement à charge partielle du moteur à combustion interne (1) et ouvre ledit passage à pleine charge étant disposée à l'un des points de raccordement entre la conduite de liaison (19) et un premier collecteur d'échappement (13), caractérisé par le fait que la turbine (7) du turbocompresseur (8) à gaz d'échappement est disposée à l'autre point de raccordement entre la conduite de liaison (19) et le second collecteur d'échappement (6) et qu'un tronçon d'échappement (4,5), auquel un catalysateur (9,15) est associé en aval du point de raccordement, s'étend à partir de chacun des points de raccordement.

2. Moteur à combustion interne selon la revendication 1, caractérisé par le fait que la sortie du catalysateur (9) situé dans le premier tronçon d'échappement (4) est amenée dans le second tronçon d'échappement (5) en amont du catalysateur (15) de celui-ci.
